# EUROPÄISCHE PATENTSCHRIFT

(11) **EP 2 292 711 B1**
(45) Veröffentlichungstag und Bekanntmachung des Hinweises auf die Patenterteilung: **09.11.2011**
(21) Anmeldenummer: 09169291.3
(22) Anmeldetag: 02.09.2009
(51) Int. Cl.: C09J 11/06, C09J 11/08

(54) **Verwendung von Carbodiimiden als Farbstabilisator in Schmelzklebstoffen**
Use of carbodiimides as colour stabiliser in melting adhesives
Utilisation de carbodiimides comme stabilisateurs de couleur dans des adhésifs de contact fusibles

(43) Veröffentlichungstag der Anmeldung: 09.03.2011
(73) Patentinhaber: Rhein Chemie Rheinau GmbH, 68219 Mannheim (DE)
(72) Erfinder: Scheffner, Christian, 69207, Sandhausen (DE); Kray, Bernd, 67346, Speyer (DE); Laufer, Wilhelm, 67158, Ellerstadt (DE); Orsini, Franco, 67294, Ilbesheim (DE)
(74) Vertreter: Siegers, Britta

(56) Entgegenhaltungen:
- EP-A- 1 505 110
- EP-A- 1 514 897
- EP-A- 1 767 572

## Beschreibung

Die vorliegende Erfindung betrifft die Verwendung von polymeren Carbodiimiden zur Farbstabilisierung von ausgehärteten Polyurethan Schmelzklebstoffen.

Unter einer Farbstabilisierung wird im Rahmen der vorliegenden Erfindung ein Schutz von Polyurethan-Schmelzklebstoffen vor Veränderung der Farbe verstanden. Insbesondere wird unter einer Farbstabilisierung im Rahmen der vorliegenden Erfindung verstanden, dass es bei einem ausgehärteten Polyurethan-Schmelzklebstoff nicht zu einer Veränderung der Farbe kommt, wobei erfindungsgemäß eine Farbkonstanz für einen Zeitraum von mindestens 30 Tagen bei Bedingungen von 100 °C und einer relativen Luftfeuchtigkeit von 95 % zugrunde zulegen sind. Diese simulierten Bedingungen entsprechen einer Alterung, welche in 2 bis 4 Jahren in einem heißen feuchten Klima (beispielsweise in Asien) auftreten wird.

Schmelzklebstoffe, auch Heißklebestoffe, Heißkleber oder Heissleim genannt, sind lösungsmittelfreie und bei Raumtemperatur mehr oder weniger feste Produkte, die im heißen Zustand beispielsweise auf die Oberfläche eines Gegenstandes aufgetragen werden und beim Abkühlen eine Verbindung zwischen der Oberfläche des Gegenstandes und einer weiteren Oberfläche erzeugen. Diese auch als Hotmelt bekannte Gruppe von Klebstoffen basiert auf verschiedenen chemischen Systemen.

Bei der Anwendung wird der Schmelzklebstoff zum Schmelzen gebracht und in einer aufgeweichten Form beispielsweise einem Beschichtungskopf zugeführt. Von dort wird der geschmolzene Klebstoff durch eine Form gepresst, um die Klebstoffschicht zu bilden.

Schmelzklebstoffsysteme sind aus dem Stand der Technik umfangreich bekannt.

So beschreibt die EP 1 533 331 A Polyamide auf Basis von C₄-C₁₈-Dicarbonsäuren und Diaminen als Formmasse zur Herstellung von Formteilen im Niederdruckspritzgussverfahren. Als Verwendung wird beschrieben, dass in solche flüssigen Schmelzklebstoff-Formteile andere Formteile, wie Kabel, Kabelsteckverbindungen und Kontakthülsen, eingegossen werden können und so eine feste mechanische Verbindung ergeben.

Weiterhin ist die EP 0 586 450 A bekannt. Diese beschreibt Schmelzklebstoffe unter anderem aus Polyamid, die einen bestimmten Schmelzbereich aufweisen. Mit solchen aufgeschmolzenen Schmelzklebstoffen können dann Kabel oder Steckverbindungen vergossen werden. Diese ergeben dabei eine verklebte und abgedichtete Umhüllung der Steckverbindung.

Auch nichtreaktive Schmelzklebstoffe sind bekannt. So werden in der EP I 124 911 A Schmelzklebstoffe beschrieben, die auf Basis von Poly-a-olefinen hergestellt werden. Diese werden insbesondere für den Auftrag des Schmelzklebstoffs durch Sprühen beschrieben. Die EP 0 388 712 A beschreibt Schmelzklebstoffe auf Basis von Ethylen-Acrylsäure-Acrylester-Copolymeren. Diese Copolymere dienen zur Verklebung von festen Substraten. Weiterhin werden in der EP 0 890 584 A Schmelzklebstoffe beschrieben, die auf Basis von Polyolefinen bestehen, die durch eine Metallocen-katalysierte Synthese hergestellt werden. Solche Schmelzklebstoffe zeichnen sich durch eine besonders enge Molekulargewichtsverteilung und durch einen engen Schmelzbereich aus.

Weiterhin ist die DE 19 924 138 A bekannt, in der Schmelzklebstoffzusammensetzung beschrieben werden, die nanoskalige ferromagnetische Teilchen enthalten. Es wird beschrieben, dass solche Klebverbindungen durch Einwirkung elektromagnetischer Strahlung erwärmt werden können, wobei sich die Klebeverbindung dann leicht lösbar ist.

Nachteilig bei diesen bekannten Schmelzklebstoffen ist, dass sie nach der Aushärtung nicht farbstabil sind, so dass es häufig zu einer nachträglichen Veränderung der Farbe der ausgehärteten Schmelzklebstoffe kommt. Dieses ist insbesondere dann nicht wünschenswert, wenn es auf das dauerhafte optische Erscheinungsbild des Schmelzklebstoffes ankommt.

Um eine Farbveränderung der Schmelzklebstoffe zu verhindern, werden den Schmelzklebstoffen häufig entsprechende Additive, wie Antioxidationsmittel auf Basis von Phenolen, zugegeben. So beschreibt die EP 0 749 463 A beispielsweise die Verwendung von Irganox^{®} 1010, einem Antioxidationsmittel auf Phenolbasis, als Farbstabilisator in Schmelzklebstoffen.

Der Einsatz von Carbodiimiden in thermoplastischen Polymeren ist aus EP-A-1505110, EP- A-1514897 und EP-A-1 767572 bekannt.

Nachteilig an diesen Farbstabilisatoren ist jedoch, dass die Farbstabilisierungswirkung nicht immer zufriedenstellend ist. Für ausgehärtete Polyurethan-Schmelzklebstoffe wird jedoch im Stand der Technik keine befriedigende Lösung bereitgestellt.

Die Aufgabe der vorliegenden Erfindung ist demgemäss, eine verbesserte Verfahrensweise zur Stabilisierung der Farbe von ausgehärteten Polyurethan-Schmelzklebstoffen bereitzustellen. Die Verfahrensweise soll sich insbesondere für den ausgehärteten Polyurethan-Schmelzklebstoff eignen, so dass es bei diesem nicht zu einer Veränderung der Farbe kommt, wobei erfindungsgemäß eine Farbkonstanz für einen Zeitraum von mindestens 30 Tagen bei Bedingungen von 100 °C und einer relativen Luftfeuchtigkeit von 95 % zugrunde zulegen sind.

Gelöst wird diese Aufgabe durch die Verwendung von polymeren Carbodiimiden zur Farbstabilisierung in ausgehärteten Polyurethan-Schmelzklebstoffen, wobei der N-C-N-Anteil (Carbodiimidanteil) weniger als 0,15 Gew.-%, bezogen auf die Gesamtzusammensetzung des Schmelzklebstoffs, beträgt.

Aus dem Stand der Technik ist bekannt, Carbodiimide als Hydrolyseschutzmittel von Schmelzklebstoffen zu verwenden.

So offenbart beispielsweise die WO 02/090454 A die Verwendung von Carbodiimiden als Hydrolyseschutzmittel in Schmelzklebstoffen. Die Verwendung von polymeren Carbodiimiden als Farbstabilisierungsmittel in ausgehärteten Polyurethan-Schmelzklebstoffen mit einem bestimmten N-C-N-Anteil ist jedoch aus diesem Stand der Technik nicht bekannt. Darüber hinaus sind erfahrungsgemäß die Mengen an Carbodiimiden, welche für einen wirkungsvollen Hydrolyseschutz verwendet werden, groß, während die Farbstabilisierung von Schmelzklebstoffen durch Carbodiimide bereits mit relativ geringen Mengen des Additivs erreicht werden kann.

Erfindungsgemäß erhält der Fachmann somit die technische Lehre, polymere Carbodiimide nicht als Hydrolyseschutzmittel, sondern zur Stabilisierung der Farbe von ausgehärteten Polyurethan- Schmelzklebstoffen zu verwenden.

Erfindungsgemäß wird ferner die Verwendung von einem polymeren Carbodiimid zur Farbstabilisierung von ausgehärteten Polyurethan-Schmelzklebstoffen vorgeschlagen, bei welcher in einer **Ausführungsform** der vorliegenden Erfindung im polymeren Carbodiimid der N-C-N-Anteil in der Gesamtzusammensetzung des ausgehärteten Polyurethan-Schmelzklebstoffs weniger als 0,06 Gew.-%, bezogen auf die Gesamtzusammensetzung des Schmelzklebstoffs, beträgt.

Überraschenderweise wurde herausgefunden, dass eine ausreichende Farbstabilisierung auch bereits bei geringen NCN-Anteilen erreicht werden kann, während gleichzeitig ein mehr als zufrieden stellender Hydrolyseschutz erreicht wird. Diese vorteilhafte Balance zwischen für den Hydrolyseschutz ausreichender Additivierung und betriebswirtschaftlichen Kosten lässt sich darüber hinaus bei moderaten Verfahrensdauern, d.h. Einwirkzeit des Carbodiimids auf den Schmelzklebstoff, realisieren.

Als Schmelzklebstoffe können beispielsweise reaktive Schmelzklebstoffe, insbesondere feuchtigkeitsvernetzende und/oder strahlenvernetzende, insbesondere UV-vernetzende, Schmelzklebstoffe, eingesetzt werden. Beispiele für erfindungsgemäß geeignete reaktive Schmelzklebstoffe sind Schmelzklebstoffe auf Basis von isocyanatterminierten Polyurethanen. Besonders bevorzugt im Sinne der Erfindung sind Schmelzklebstoffe auf Basis von isocyanatterminierten Polyurethanen.

Alternativ können als Schmelzklebstoffe reaktive Polyurethan-Schmelzklebstoffe auf Basis strahlenvernetzender reaktiver Schmelzklebstoffe, insbesondere unter UV-Bestrahlung vernetzender Schmelzklebstoffe, eingesetzt werden.

Bei den reaktiven Polyurethan-Schmelzklebstoffen führt die nachfolgende Vernetzung beispielsweise mit Feuchtigkeit zu temperatur- bzw. hitzebeständigen Verklebungen. Reaktive Schmelzklebstoffe kombinieren somit die Vorteile der schnellen Anfangsfestigkeit durch den physikalischen Abbindevorgangs des Abkühlens mit einer nachfolgend stattfindenden chemischen Vernetzung. Bei der Verarbeitung feuchtigkeitsreaktiver Schmelzklebstoffe sollte die Schmelze vor ihrer Applikation vor Feuchtigkeit geschützt werden.

Weitere, erfindungsgemäß geeignete reaktive Schmelzklebstoffe umfassen - wie zuvor beschrieben - beispielsweise strahlenvernetzende reaktive Schmelzklebstoffe (z. B. reaktive Schmelzklebstoffe, die unter UV-Bestrahlung vernetzen). Geeignete strahlenvernetzende Schmelzklebstoffe sind z. B. UV-vernetzbare Schmelzklebstoffe. Im Falle UV-vernetzender Schmelzklebstoffe wird der eingesetzten Klebstoffmischung im allgemeinen ein Photoinitiator zugesetzt; dieser kann der Klebstoffmischung entweder als separater Photoinitiator zugesetzt sein oder aber Bestandteil des UV-vernetzbaren Schmelzklebstoffs selbst sein, insbesondere in dem UV-reaktiven Polymer. Durch die Bestrahlungs- bzw. Vernetzungsdauern, -intensitäten, -energien, -wellenlängen etc. lassen sich die Eigenschaften der Klebeverbindung gezielt steuern (z. B. Scherfestigkeiten etc.). Wie nachfolgend noch im Detail beschrieben, können zur Steuerung der offenen Zeit und/oder der Adhäsionseigenschaften der strahlenvernetzenden, insbesondere UV-vernetzenden reaktiven Schmelzklebstoffe Additive auf Basis nichtreaktiver Polymere, Harze und/oder Wachse zugesetzt sein, so z. B. gegebenenfalls hydrierte Kolophoniumharzester und aliphatische Kohlenwasserstoffharze. Eine erfindungsgemäß besonders geeignete Beispielrezeptur für ein UV-vernetzendes reaktives Schmelzklebstoffsystem umfasst.

Im Folgenden werden die erfindungsgemäßen Polyurethan- Schmelzklebstoffsysteme näher beschrieben.

In der EP 0 434 467 A oder der DE 41 28 274 Awerden thermoplastische Polyurethane als Schmelzklebstoffe beschrieben. Es handelt sich dabei um Umsetzungsprodukte von Polyolen mit Polyisocyanaten, die gegebenenfalls einen erhöhten Modul aufweisen. Als Polyole können die an und für sich bekannten Polyole auf Basis von Polyethern, Polyestern, Polyacrylaten, Polybutadienen, Polyole auf Basis von pflanzlichen Rohstoffen, wie oleochemische Polyole, eingesetzt werden. Um eine gute Reaktivität zu erzielen, sind üblicherweise zumindest anteilig aromatische Isocyanate enthalten. Durch Auswahl der Polyole und/oder Isocyanate können die Eigenschaften des Prepolymeren beeinflusst werden, beispielsweise der Schmelzpunkt, die Elastizität oder die Haftung. Es sind aber auch reaktive thermoplastische Polyurethane geeignet, die dann nach Applikation gegebenenfalls auch dauerhaft vernetzen können.

Weiterhin können die erfindungsgemäß geeigneten Schmelzklebstoffe - neben dem polymeren Carbodiimid als Farbstabilisator - weitere übliche Zusätze enthalten. Beispiele dafür sind klebrig machende Harze, wie z.B. Abietinsäure, Abietinsäureester, Terpenharze, Terpenphenolharze oder Kohlenwasserstoffharze; Füllstoffe, z.B. Silikate, Talk, Calciumcarbonate, Tone, Russ oder Pigmente; Antioxidantien oder Stabilisatoren, z.B. vom Typ der sterisch gehinderten Phenole oder der aromatischen Aminderivate; faserförmige Additive, wie natürliche Fasern, Kunststoff- oder Glasfasern. Die Antioxidantien können dabei in Mengen bis zu 1,5 Gew.% bezogen auf das Polymere eingesetzt werden. Allgemein sollen diese Zusätze als Summe nicht mehr als 15 Gew.-% in einem erfindungsgemäßen Schmelzklebstoff enthalten sein.

### (2) Carbodiimid

Die erfindungsgemäß bevorzugt zu verwendende polymere Carbodiimidverbindung unterliegt im Hinblick auf ihre chemische Struktur zunächst keiner besonderen Anforderung, solange das polymere Carbodiimid in der Lage ist, die Farbe von Schmelzklebstoffen im Sinne der vorliegenden Erfindung zu stabilisieren und einen N-C-N (Carbodiimid-Anteil) von weniger als 0,15%, bezogen auf die Gesamtzusammensetzung des Schmelzklebstoffs, beträgt.

Als eine polymere Carbodiimidverbindung, die in der vorliegenden Erfindung verwendet werden kann, können diejenigen, die durch allgemein bekannte Verfahren synthetisiert werden, verwendet werden. Die Verbindung kann beispielsweise mittels Durchführen einer Decarboxylierungskondensationsreaktion von verschiedenen Polyisocyanaten unter Verwendung einer Organophosphorverbindung oder einer Organometallverbindung als ein Carbodiimidisierungskatalysator bei einer Temperatur von nicht weniger als etwa 70 °C ohne Verwendung von irgendeinem Lösungsmittel oder Verwendung eines inerten Lösungsmittels erhalten werden.

Entsprechende Verfahren zur Herstellung von polymeren Carbodiimiden und entsprechend geeignete Verbindungen sind beispielsweise beschrieben in US 2,941,956, J. Org. Chem. 28, 2069-2075 (1963) und Chemical Review, 1981, Bd. 81, Nr. 4, Seite 619 bis 621.

Ein organisches Diisocyanat als ein Ausgangsmaterial zur Herstellung einer Polycarbodiimidverbindung umfaßt beispielsweise aromatisches Diisocyanat, aliphatisches Diisocyanat, alicyclisches Diisocyanat oder ein Gemisch davon, und umfaßt speziell 1,5-Naphthalindiisocyanat, 4,4'-Diphenylmethandiisocyanat, 4,4'-Diphe-nyldimethylmethandiisocyanat, 1,3-Phenylendiisocyanat, 1,4-Phenylendiisocyanat, 2,4-Tolylendiisocyanat, 2,6-Tolylendiisocyanat, ein Gemisch aus 2,4-Tolylendiisocyanat und 2,6-Tolylendiisocyanat, Hexamethylendii-socyanat, Cyclohexan-1,4-diisocyanat, Xylylendiisocyanat, Isophorondiisocyanat, Dicyclohexylmethan-4,4'-diisocyanat, Methylcyclohexandiisocyanat, Tetramethylxylylendiisocyanat, 2,6-Diisopropylphenylenisocyanat und 1,3,5-Triisopropylbenzol-2,4-diisocyanat.

Außerdem kann bei der oben beschriebenen Polycarbodiimidverbindung ihr Polymerisationsgrad auf ein geeignetes Niveau unter Verwendung einer Verbindung, wie Monoisocyanat, die zur Umsetzung mit einer terminalen Isocyanatgruppe der Polycarbodiimidverbindung fähig ist, kontrolliert werden.

Das Monoisocyanat zur Kontrolle des Polymerisationsgrades durch Schützen einer terminalen Gruppe der Polycarbodiimidverbindung umfaßt Phenylisocyanat, Tolylisocyanat, Dimethylphenylisocyanat, Cyclohexy-lisocyanat, Butylisocyanat und Naphthylisocyanat.

Außerdem ist das terminate Schutzmittel zur Kontrolle des Polymerisationsgrades durch Schützen einer terminalen Gruppe der Polycarbodiimidverbindung nicht auf die oben beschriebenen Monoisocyanate beschränkt und umfasst Verbindungen mit einem aktiven Wasserstoff, der zur Umsetzung mit Isocyanat fähig ist, beispielsweise (i) eine aliphatische, aromatische oder alicyclische Verbindung mit einer -OH-Gruppe, wie Methanol, Ethanol, Phenol, Cyclohexanol, N-Methylethanolamin, Oligo-, Polyethylenglykolmonomethylether und Oligo-, Polypropylenglykolmonoalkylether, Fett- und Oleylalkohole; (ii) eine Verbindung mit einer =NH-Gruppe, wie Diethylamin und Dicyclohe-xylamin; (iii) eine Verbindung mit eine =NH₂-Gruppe, wie Butylamin und Cyclohexylamin; (iv) eine Verbindung mit einer-COOH-Gruppe, wie Bernsteinsäure, Benzoesäure und Cyclohexancarbonsäure; (v) eine Verbindung mit einer -SH-Gruppe, wie Ethylmercaptan, Allylmercaptan und Thiophenol; und (vi) eine Verbindung mit einer Epoxidgruppe.

Die Decarboxylierungskondensationsreaktion des oben beschriebenen organischen Diisocyanats wird in Gegenwart eines geeigneten Carbodiimidierungskatalysators durchgeführt. Als Carbodiimidierungskatalysator, der verwendet werden soll, sind eine Organophosphorverbindung und eine Organometallverbindung [eine Verbindung, ausgedrückt durch die allgemeine Formel M-(OR)₄, worin M Titan (Ti), Natrium (Na), Kalium (K), Vanadium (V), Wolfram (W), Hafnium (Hf), Zirkonium (Zr), Blei (Pb), Mangan (Mn), Nickel (Ni), Calcium (Ca) und Barium (Ba) und dergleichen ist; R eine Alkylgruppe oder Arylgruppe mit 1 bis 20 Kohlenstoffatomen ist] bevorzugt, und Phospholenoxid unter den Organophosphorverbindungen und Alkoxide von Titan, Hafnium und Zirkonium unter den Organometallverbindungen sind aus Sicht der Aktivität besonders bevorzugt. Weiter zu erwähnen sind starke Basen, beispielsweise Alkali- und Erdalkalihydroxide oder -oxide, Alkoholate und Phenolate.

Die oben beschriebenen Phospholenoxide umfassen speziell 3-Methyl-l-phenyl-2-phospholen-l-oxid, 3-Methyl-l-ethyl-2-phospholen-l-oxid, 1,3-Dimethyl-2-phospholen-1-oxid, 1-Phenyl-2-phospholen-1-oxid, 1-Ethyl-2-phospholen-1-oxid, 1-Methyl-2-phospholen-l-oxid und Doppelbindungsisomere davon. Von denen ist aufgrund der leichten industriellen Verfügbarkeit 3-Methyl-1-phenyl-2-phospholen-I-oxid besonders bevorzugt.

Die Carbodiimidverbindung ist insbesondere 4,4'-Dicyclohexylmethancarbodiimid (Polymerisationsgrad = 2 bis 20), Tetramethylxylylencarbodiimid (Polymerisationsgrad = 2 bis 20), N,N-Dimethylphenylcarbodiimid (Polymerisationsgrad = 2 bis 20) und N,N'-Di-2,6-diisopropylphenylencarbodiimid (Polymerisationsgrad = 2 bis 20) und dergleichen, und ist nicht speziell beschränkt, so lange wie die Verbindung mindestens eine Carbodiimidgruppe in einem Molekül mit der Funktion aufweist.

Im Folgenden werden mehrere bevorzugte Ausgestaltungen der polymeren Carbodiimidverbindung näher erläutert.

Ein entsprechendes polymeres Carbodiimid weist die allgemeine Formel (1) auf 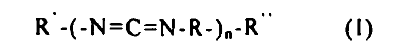 in der
- R einen aromatischen, aliphatischen, cycloaliphatischen oder araliphatischen Rest bedeutet, der in dem Fall eines aromatischen oder eines araliphatischen Restes in einer ortho-Stellung, bevorzugt in beiden ortho-Stellungen zum aromatischen Kohlenstoffatom, das die Carbodiimidgruppe trägt, aliphatische und/oder cycloaliphatische Substituenten mit mindestens 2 Kohlenstoffatomen, bevorzugt verzweigte oder cyclische aliphatische Reste mit mindestens 3 Kohlenstoffatomen, insbesondere Isopropylgruppen, tragen kann,
- R' gleich Aryl, Aralkyl oder R-NCO, R-NHCONHR¹, R-NHCONRR² und R-NHCOOR³ bedeutet,
- R" gleich -N=C=N-Aryl, -N=C=N-Alkyl, -N=C=N-Cycloaliphat, -N=C=N-Aralkyl, -NCO, -NHCONHR¹, -NHCONR¹R² oder NHCO0R³ bedeutet,
- wobei in R' und in R" unabhängig voneinander R¹ und R² gleich oder verschieden sind und einen Alkyl-, Cycloalkyl- oder Aralkylrest darstellen und R³ eine der Bedeutungen von R¹ hat oder einen Polyesteroder einen Polyamidrest bedeutet und
- n eine ganze Zahl von 2 (dimer) bis 5.000, bevorzugt von 2 bis 500, darstellt.

In einer **ersten bevorzugten Ausbildung** dieser polymeren Carbodiimide steht R für einen aromatischen oder araliphatischen Rest, der in mindestens einer ortho-Stellung, bevorzugt in beiden ortho-Stellungen zum aromatischen Kohlenstoffatom, das die Carbodiimidgruppe trägt, aliphatische und/oder cycloaliphatische Substituenten mit mindestens 2 Kohlenstoffatomen, bevorzugt verzweigte oder cyclische aliphatische Reste mit mindestens 3 Kohlenstoffatomen, insbesondere Isopropylgruppen, trägt.

Besonders geeignet sind solche Carbodiimide der allgemeinen Formeln (1) und (II), die in den ortho-Stellungen zur Carbodiimidgruppe durch Isopropyl substituiert sind und die in der para-Stellung zur Carbodiimidgruppe ebenfalls durch Isopropyl substituiert sind.

In einer **zweiten bevorzugten Ausbildung** dieser polymeren Carbodiimide steht R für einen aromatischen Rest, der über einen C₁- bis C₈-Alkylrest, vorzugsweise C₁- bis C₄-Alkylrest, mit der Carbodiimidgruppe (-N=C=N-) verbunden ist.

Ferner können auch polymere aliphatische Carbodiimide, beispielsweise auf Basis von Isophorondiisocyanat oder H12-MDI (hydriertes MDI) welche von der Firma Nishinbo^{®} erhältlich sind, verwendet werden.

Zur Herstellung der Polycarbodiimide der allgemeinen Formel (I) können Diisocyanate verwendet werden, welche durch Kondensation unter Abspaltung von Kohlendioxid bei erhöhten Temperaturen, z.B. bei 40 °C bis 200 °C, in Gegenwart von Katalysatoren zu den entsprechenden Carbodiimiden umgesetzt werden. Geeignete Verfahren werden in DE-A-11 30 594 und in der FR 1 180 370 beschrieben. Als Katalysatoren haben sich z.B. starke Basen oder Phosphorverbindungen bewährt. Vorzugsweise werden Phospholenoxide, Phospholidine oder Phospholinoxide sowie die entsprechenden Sulfide verwendet. Ferner können als Katalysatoren tertiäre Amine, basisch reagierende Metallverbindungen, Coarbonsäuremetallsalze und nicht basische Organometallverbindungen verwendet werden.

Zur Herstellung der eingesetzten Polycarbodiimide eignen sich alle Isocyanate, wobei im Rahmen der vorliegenden Erfindung bevorzugt Polycarbodiimide verwendet werden, die auf durch C₁- bis C₄-Alkyl substituierten aromatischen Isocyanaten wie z.B. 2,6-Diisopropylphenylisocyanat, 2,4,6-Triisopropylphenyl-1,3-diisocyanat, 2,4,6-Triethylphenyl-1,3-diisocyanat, 2,4,6-Trimethylphenyl-1,3-diisocyanat, 2,4'-Diisocyanatodiphenylmethan, 3,3',5,5'-Tetraisopropyl-4,4'-diisocyanatodiphenylmethan, 3,3',5,5'-Tetraethyl-4,4'-diisocyanatodiphenylmethan, Tetramethylxyloldiisocyanat oder deren Gemische, und auf substituierte Aralkyle, wie 1,3-Bis-(I-methyl-1-isocyanato-ethyl)-benzol basieren. Besonders bevorzugt ist es, wenn die Polycarbodiimide auf 2,4,6-Triisopropylphenyl-1,3-diisocyanat basieren.

Polycarbodiimide können außerdem, wenn sie aus Isocyanaten hergestellt worden sind, noch reaktionsfähige NCO-Gruppen und komplex gebundene monomere Isocyanate enthalten.

Diese NCO-Gruppen-haltigen Polycarbodiimide können in der Weise modifiziert werden, dass die vorhandenen Isocyanatgruppen mit reaktionsfähigen, Wasserstoff enthaltenden Verbindungen wie Alkoholen, Phenolen oder Aminen beseitigt werden (vgl. DE 11 56 401 A und DE 24 19 968 A). Diesbezüglich ist insbesondere auch auf die Verwendung von Polypropylenglykolmonoalkylether, Fett- und Oleylalkoholresten zur Endcappung zu verweisen.

Die polymeren Carbodiimide der allgemeinen Formel (II) können ferner mit 1-socyanatverbindungen endgecappt sein.

Polymere Carbodiimide im Sinne der vorliegenden Erfindung sind von der Firma Rhein Chemie Rheinau GmbH kommerziell unter den Bezeichnung Stabaxol^{®} P (N-C-N-Gehalt: 13-14%), Stabaxol^{®} P100 (N-C-N-Gehalt: 13-14%), Stabaxol^{®} P200 (N-C-N-Gehalt: 6-7,5%) bzw. Stabaxol^{®} P400 (N-C-N-Gehalt: 13-14%) erhältlich. Auch die von der Firma Rasching vertriebenen Produkte mit der Bezeichnung Stabilisator 2000, 9000 und 11000 können im Rahmen der vorliegenden Erfindung verwendet werden.

Insbesondere bevorzugt ist ein polymeres Carbodiimid auf der Basis von Tetramethylxyloldiisocyanat, welches mit Polyethylenglykolmonomethylether endgecappt ist. Weiter bevorzugt umfasst dieses polymere Carbodiimid keine endständigen freien Isocyanatgruppen.

Die Carbodiimide können im Rahmen der vorliegenden Erfindung auch als Gemische mehrerer Carbodiimide verwendet werden.

Darüber hinaus ist es im Sinne der vorliegenden Erfindung bevorzugt, wenn Carbodiimide verwendet werden, welche einen reduzierten Gehalt an freien lsocyanaten enthalten. Bevorzugte Carbodiimide enthalten vorzugsweise weniger als 1 Gew.-% an freien Isocyanaten.

Die erfindungsgemäß zu verwendenden Carbodimide zur Farbstabilisierung der ausgehärteten Polyurethan-Schmelzklebstoffe werden vorzugsweise nach Herstellung der Schmelzklebstoffe mit diesen vermischt. Beispielsweise können die erfindungsgemäß zu verwendenden Polycarbodiimide direkt mit den Polyurethan-Schmelzklebstoffen zu einem Blend vermischt werden. Die Mischung kann dabei auf den für die Kunststoffverarbeitung typischen Mischaggregaten durchgeführt werden (DIN 24450, Saechtling-Kunststofftaschenbuch). Besonders geeignet als Mischaggregate sind Kneter, Einschneckenextruder, Doppelschneckenextruder, Kaskadenextruder, Entgasungs-Extruder, Mehrschneckenextruder und Planetwalzenextruder. Üblicherweise arbeitet man oberhalb der Schmelztemperatur mindestens einer der Komponenten.

Bei der Herstellung der erfindungsgemäßen ausgehärteten Polyurethan-Schmelzklebstoffe können noch weitere bekannte Additive wie z.B. Stabilisatoren, Füllstoffe, Farbstoffe, Flammschutzmittel und Gleitmittel eingearbeitet werden.

Im Rahmen der vorliegenden Erfindung wird der Polyurethan-Schmelzklebstoff beispielsweise in einem Bereich der Verpackungsindustrie, insbesondere zum Verkleben von Kartons, Briefumschlägen und Beuteln; der Kleidung, insbesondere zum Einkleben von Schulterpolstern in Jacketts, der Ölfilter, insbesondere in Fahrzeugen zum Einkleben von Papierrollen in das Gehäuse; der Elektrotechnik, insbesondere beim Umspritzen von Bauteilen und Elektroniken als Gehäuseersatz; der Kabeldurchführungen und Dichtungsmuffen, insbesondere für Leitungen in Kraftfahrzeugen; der Möbel- und Holzindustrie; der Laminiertechnik; der Schuhindustrie; der Windeln, insbesondere zum Verkleben der saugfähigen Vliese in die Hülle; der Teppichindustrie; im Heimwerkerbereich, insbesondere in der Form von Schmelzklebepistolen mit Klebstoffkerzen; und des Buchbinden, insbesondere zum Anbringen des Umschlags am Buch; eingesetzt.

Die vorliegende Erfindung wird anhand der nachfolgend dargestellten Beispiele näher erläutert, welche die Erfindung jedoch keineswegs beschränken.

### Ausführungsbeispiele:

Herstellung und Aushärtung der Schmelzklebstoffe:
Ein Polyester-Polyol (Polyol 1 = Dynacoll® 7320, Polyol 2 = Dynacoll® 7380, erhältlich bei der Firma Evonik Degussa) wurde bei ca. 120°C aufgeschmolzen und im Vakuum 45 Minuten getrocknet. Dann wurde die in der nachstehenden Tabelle angegebenen Mengen an Stabaxol P200 zugefügt und die Mischung gut homogenisiert. Die in Tabelle 1 angegebene Menge an Isocyanat wurde unter Inertgas und unter Rühren zugeführt. Nach einer Reaktionszeit von 45 Minuten bei 120°C betrug der Isocyanat-Gehalt 3% (bestimmt durch Titration. Aus dem auf diese Weise erhaltene Präpolymer wurde ein 1 mm dicker Film erstellt, der unter Feuchtigkeit und Standardbedingungen von 23°C/50% relative Luftfeuchtigkeit vernetzt wurde.

**Tabelle 1: Einsatzmengen**

| Ansatz | A | B | C |
|---|---|---|---|
| Polyester Polyol 1 (Gew%) | 40 | 40 | 40 |
| Polyester Polyol 2 (Gew %) | 60 | 60 | 60 |
| Stabaxol P 200 (Carbodiimid-Gehalt: 6%) (Gew%) | - | 1,1 | 0,83 |
| MDI (34% NCO) (Gew %) | 14 | 14 | 14 |

Für die Alterungstests wurden aus den vernetzten Mustern A bis C Probekörper ausgestanzt und die Verfärbung nach einer Lagerung bei 100°C und einer relativen Luftfeuchtigkeit von 95% beurteilt. Die Testergebisse sind nachstehend aufgeführt.

Die optischen Ergebnisse der Formkörper vor und nach der Alterung sind wie folgt:

| Ansatz | Optische Ergebnisse vor Alterung | Optische Ergebnisse nach Alterung |
|---|---|---|
| A | Weißer Formkörper | Gelber Formkörper |
| B | Weißer Formkörper | Weißer Formkörper, keine Verfärbung |
| C | Weißer Formkörper | Weißer Formkörper, keine Verfärbung |

Es ist zu erkennen, dass durch die erfindungsgemäße Additivierung eine verbesserte Farbstabilität erreicht wird.

## Patentansprüche

1. Verwendung von polymeren Carbodiimiden zur Farbstabilisierung von ausgehärteten PU-Schmelzklebstoffen, **dadurch gekennzeichnet, dass** der N-C-N-Anteil (Carbodiimidanteil) weniger als 0,15 Gew.-%, bezogen auf die Gesamtzusammensetzung des Schmelzklebstoffs, beträgt.

2. Verwendung nach Anspruch 1, **dadurch gekennzeichnet, dass** das Carbodiimid die allgemeine Formel (1) 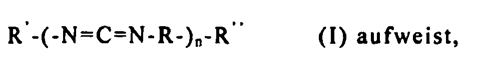 in der
○ R einen aromatischen, aliphatischen, cycloaliphatischen oder araliphatischen Rest bedeutet, der in dem Fall eines aromatischen oder eines araliphatischen Restes in beiden ortho-Stellungen zum aromatischen Kohlenstoffatom, das die Carbodiimidgruppe trägt, aliphatische und/oder cycloaliphatische Substituenten mit mindestens 2 Kohlenstoffatomen, tragen kann,
○ R' gleich Aryl, Aralkyl oder R-NCO, R-NHCONHR¹, R-NHCONR¹R² und R-NHCOOR³ bedeutet,
○ R" gleich -N=C=N-Aryl, -N=C=N-Alkyl, -N=C=N-Cycloaliphat, -N=C=N-Aralkyl, -NCO, -NHCONHR¹, -NHCONR¹R² oder NHCOOR³ bedeutet,
○ wobei in R' und in R" unabhängig voneinander R¹ und R² gleich oder verschieden sind und einen Alkyl-, Cycloalkyl- oder Aralkylrest darstellen und R³ eine der Bedeutungen von R¹ hat oder einen Polyester- oder einen Polyamidrest bedeutet und
○ n eine ganze Zahl von 2 bis 5.000 darstellt.

3. Verwendung nach einem der Ansprüche 1 bis 2, **dadurch gekennzeichnet, dass** die Carbodiimide als Mischungen eingesetzt werden.

4. Verwendung nach einem der Ansprüche 1 bis 3, **dadurch gekennzeichnet, dass** der Schmelzklebstoff in einem Bereich der Verpackungsindustrie, der Kleidung, der Ölfilter, der Elektrotechnik, der Kabeldurchführungen und Dichtungsmuffen, der Möbel- und Holzindustrie, der Laminiertechnik, der Schuhindustrie, der Windeln, der Teppichindustrie, im Heimwerkerbereich und des Buchbindens.

5. Verwendung nach einem der Ansprüche 1 bis 4, **dadurch gekennzeichnet, dass** der Schmelzklebstoff zum Verkleben von Kartons, Briefumschlägen und Beuteln, zum Einkleben von Schulterpolstern in Jacketts, in Fahrzeugen zum Einkleben von Papierrollen in das Gehäuse in Ölfiltern, beim Umspritzen von Bauteilen und Elektroniken als Gehäuseersatz in der Elektrotechnik, für Leitungen in Kraftfahrzeugen bei Kabeldurchführungen und Dichtungsmuffen, zum Verkleben der saugfähigen Vliese in die Hülle bei Windeln, in der Form von Schmelzklebepistolen mit Klebstoffkerzen in der Teppichindustrie oder im Heimwerkerbereich und zum Anbringen des Umschlags am Buch.

## Claims

1. Use of polymeric carbodiimides for colour stabilization of cured PU hotmelt adhesives, **characterized in that** the N-C-N fraction (carbodiimide fraction) is less than 0.15% by weight, based on the overall composition of the hot-melt adhesive.

2. Use according to Claim 1, **characterized in that** the carbodiimide has the general formula (I) 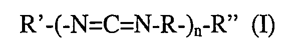 in which
○ R is an aromatic, aliphatic, cycloaliphatic or araliphatic radical which, in the case of an aromatic or araliphatic radical, in both ortho positions relative to the aromatic carbon atom bearing the carbodiimide group, may bear aliphatic and/or cycloaliphatic substituents having at least 2 carbon atoms,
○ R' is aryl, aralkyl or R-NCO, R-NHCONHR¹, R-NHCONR¹R² and R-NHCOOR³,
○ R" is -N=C=N-aryl, -N=C=N-alkyl, -N=C=N-cycloaliphatic, -N=C=N-aralkyl, -NCO, -NHCONHR¹, -NHCONR¹R² or NHCOOR³,
○ where in R' and in R", independently of one another, R¹ and R² are identical or different and represent an alkyl, cycloalkyl or aralkyl radical, and R³ has one of the meanings of R¹ or is a polyester radical or a polyamide radical, and
○ n represents an integer from 2 to 5000.

3. Use according to either of Claims 1 to 2, **characterized in that** the carbodiimides are used as mixtures.

4. Use according to any of Claims 1 to 3, **characterized in that** the hot-melt adhesive is used in packaging, apparel, oil filters, electrical engineering, cable ducts and sealing sleeves, the furniture and wood industry, laminating technology, the footwear industry, nappies, the carpet industry, the home-improvement sector and book binding.

5. Use according to any of Claims 1 to 4, **characterized in that** the hot-melt adhesive is used for adhering cartons, envelopes and bags, for fusing shoulder pads into jackets, in vehicles for gluing paper rolls into the casing in oil filters, in the encapsulation of structural components and electronics as casing replacement in electrical engineering, for lines in motor vehicles in the case of cable ducts and sealing sleeves, for adhering the absorbent webstock into the backsheet in the case of nappies, in the form of hot glue guns with glue sticks in the carpet industry or in the home-improvement sector, and for attaching the cover to the book.

## Revendications

1. Utilisation de carbodiimides polymères pour la stabilisation de la couleur d'adhésifs fusibles à base de PU durcis, **caractérisée en ce que** le teneur en N-C-N (teneur en carbodiimide) est inférieure à 0,15 % en poids, par rapport à la composition totale de l'adhésif fusible.

2. Utilisation selon la revendication 1, **caractérisée en ce que** le carbodiimide présente la formule générale (I) 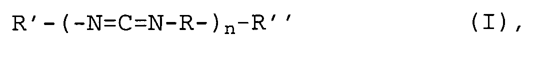 dans laquelle
O R représente un radical aromatique, aliphatique, cycloaliphatique ou araliphatique, qui dans le cas d'un radical aromatique ou d'un radical araliphatique peut porter en les deux positions ortho par rapport à l'atome de carbone aromatique, qui porte le groupe carbodiimide, des substituants aliphatiques et/ou cycloaliphatiques comportant au moins 2 atomes de carbone,
○ R' représente un groupe aryle, aralkyle ou R-NCO, R-NHCONHR¹, R-NHCONR¹R² et R-NHCOOR ³
○ R " représente un groupe -N=C=N-aryle, -N=C=N-alkyle, -N=C=N-cycloaliphatique, -N=C=N-aralkyle, -NCO, -NHCONHR¹, -NHCONR¹R² ou NHCOOR³,
○ dans R' et dans R " indépendamment l'un de l'autre R¹ et R² étant identiques ou différents et représentant un radical alkyle, cycloalkyle ou aralkyle et R³ ayant l'une des significations de R¹ ou représentant un radical polyester ou un radical polyamide et
○ n représente un nombre entier valant de 2 à 5 000.

3. Utilisation selon l'une quelconque des revendications 1 et 2, **caractérisée en ce que** les carbodiimides sont utilisés sous forme de mélanges.

4. Utilisation selon l'une quelconque des revendications 1 à 3, **caractérisée en ce que** l'adhésif fusible est utilisé dans un secteur de l'industrie de l'emballage, de l'habillement, des filtres à huile, de l'électronique, des passe-câbles et manchons d'étanchéité, de l'industrie du bois et du meuble, de la technique de la stratification, de l'industrie de la chaussure, des couches, de l'industrie du tapis, dans le secteur du bricolage et de la reliure.

5. Utilisation selon l'une quelconque des revendications 1 à 4, **caractérisée en ce que** l'adhésif fusible est utilisé pour la collage de cartons, d'enveloppes et de sacs, pour le collage d'épaulettes dans des vestes, dans des véhicules pour le collage de rouleaux de papier dans le boîtier dans des filtres à huile, dans l'enrobage de composants et de dispositifs électroniques comme remplacement de boîtiers en électrotechnique, pour des circuits dans des véhicules automobiles pour des passe-câbles et manchons d'étanchéité, pour le collage des non-tissés absorbants dans l'enveloppe de couches, sous la forme de pistolets de colle fusible à bâtons de colle dans l'industrie du tapis ou dans le secteur du bricolage et pour l'application de la jaquette sur le livre.
